# EUROPÄISCHE PATENTSCHRIFT

(11) **EP 2 722 684 B1**
(45) Veröffentlichungstag und Bekanntmachung des Hinweises auf die Patenterteilung: **28.08.2019**
(21) Anmeldenummer: 12189241.8
(22) Anmeldetag: 19.10.2012
(51) Int. Cl.: G01S 7/499, G01S 17/93

(54) **Laserscanner**
Laser scanner
Lecteur laser

(43) Veröffentlichungstag der Anmeldung: 23.04.2014
(73) Patentinhaber: SICK AG, 79183 Waldkirch/Breisgau (DE)
(72) Erfinder: Albert, Magnus, 79104 Freiburg (DE); Engler, Michael, 79350 Sexau (DE); Krämer, Joachim, 79102 Freiburg (DE)
(74) Vertreter: Manitz Finsterwald Patent- und Rechtsanwaltspartnerschaft mbB

(56) Entgegenhaltungen:
- DE-C1- 4 016 973
- GB-A- 1 113 888
- US-A- 5 206 698
- US-A1- 2007 279 615

## Beschreibung

Die vorliegende Erfindung betrifft einen Laserscanner, insbesondere einen Sicherheits-Laserscanner, nach dem Funktionsprinzip des Lichtlaufzeitverfahrens zur Erfassung von Objekten in einem Überwachungsbereich.

Mit Laserscannern können nach dem bekannten Prinzip des Lichtlaufzeitverfahrens das Vorhandensein und die Entfernung von Objekten bestimmt werden. Dazu wird entweder bei einem Pulslaufzeitverfahren ein kurzer Lichtpuls ausgesandt und die Zeit bis zum Empfang einer Reflexion des Lichtpulses gemessen, oder es wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Sicherheitslaserscanner, wie sie beispielsweise aus DE 43 40 756 A1 bekannt sind, werden häufig zur Überwachung von Arbeitsbereichen eingesetzt. Ein von einem Laser erzeugter Lichtstrahl wird über eine Lichtablenkeinheit in einen Schutzbereich gelenkt und dort von einem gegebenenfalls vorhandenen Objekt remittiert. Zumindest ein Teil des remittierten Lichts gelangt wieder zurück zu der Laserscaneinheit und wird dort von einem Empfänger detektiert. Die Lichtablenkeinheit ist in der Regel schwenkbar bzw. drehbar ausgestaltet, so dass der von dem Laser erzeugte Lichtstrahl ein durch die Schwenk- bzw. Drehbewegung erzeugtes Schutzfeld periodisch überstreicht. Wird ein vom Objekt remittiertes Lichtsignal aus dem Schutzbereich empfangen, so kann aus der Winkelstellung der Ablenkeinheit auf die Winkellage des Objektes im Schutzbereich geschlossen werden. Wird zusätzlich zum Beispiel die Laufzeit von einzelnen Laserlichtpulsen vom Aussenden bis zum Empfang einer Reflexion an dem Objekt überwacht, kann aus der Laufzeit unter Verwendung der Lichtgeschwindigkeit zusätzlich auf die Entfernung des Objektes vom Laserscanner geschlossen werden. Mit den Winkel- und Entfernungsangaben lässt sich der Ort des Objektes ermitteln und die vom Lichtstrahl überstrichene Scanebene vollständig überwachen. Befindet sich in der Scanebene ein unzulässiges Objekt, so kann von der Auswerteeinheit des Scanners ein entsprechendes Warn- oder Stoppsignal ausgegeben werden.

Derartige Systeme werden zum Beispiel an Maschinen eingesetzt, bei denen ein Gefahrenbereich überwacht werden muss, der beim Betrieb der Maschine von einer Bedienperson nicht betreten werden darf. Wird mit Hilfe des Laserscanners die Anwesenheit eines unzulässigen Objektes - also zum Beispiel ein Bein einer Bedienperson - im Gefahrenbereich festgestellt, wird ein Nothalt der Maschine bewirkt. Derartige Scansysteme als Sicherheitssensoren müssen zuverlässig arbeiten und deshalb hohe Sicherheitsanforderungen, beispielsweise die Norm EN13849 für Maschinensicherheit und insbesondere die Gerätenorm EN61496 für berührungslos wirkende Schutzeinrichtungen (BWS), erfüllen, wobei die Norm EN61496 bislang nur den Indoor Bereich umfasst.

Zur Erfüllung dieser Sicherheitsnormen sind eine Reihe von Maßnahmen zu treffen, wie z. B. sichere elektronische Auswertung durch redundante, diversitäre Elektronik, Funktionsüberwachung durch beispielsweise Überwachung der Verschmutzung optischer Bauteile, insbesondere einer Frontscheibe und Vorsehen von einzelnen Testzielen mit definierten Reflexionsgraden, die unter den entsprechenden Scanwinkeln erkannt werden müssen.

Solche Sicherheitslaserscanner werden auch an sogenannten FTS ("Fahrerlose Transportsysteme") eingesetzt, um zu verhindern, dass diese Transportsysteme mit Objekten, die ihren Fahrweg kreuzen, wie z. B. Personen, zusammenstoßen.

Im Indoor Bereich, in dem keine Sichtstörungen von außen auftreten, sind die genannten Maßnahmen zur Erfüllung der Sicherheitsnormen ausreichend. Im Outdoor Bereich ist der Einsatz von Sicherheitsscannern bisher sehr problematisch. Durch Regen, Nebel, Schnee, Luftverschmutzung wie Staub und dergleichen wird die nutzbare optische Leistung in unbekanntem Maße reduziert und damit die Detektionszuverlässigkeit reduziert. Im Folgenden werden die Wassertröpfchen, Schneekristalle und Staubteilchen, die Regen, Nebel, Schnee, Luftverschmutzung bilden, auch "weiche Objekte" genannt werden. Die Reduzierung der optischen Leistung in unbekanntem Maß führt zu nicht vorhersagbarem fehlerhaften Ansprechen des Scanners, beispielsweise aufgrund von an den weichen Objekten reflektierter Sendestrahlung, die vom Scanner als "Objekt im Schutzbereich" interpretiert wird, sobald das rückgestreute Signal oberhalb einer Bewertungsschwelle liegt.

Ein weiterer Nachteil im Outdoor Bereich ist, dass beim Auftreten von weichen Objekten die Sendestrahlung in unbekanntem Maße gedämpft wird und damit die Sichtweite in unbekanntem Maße reduziert wird, so dass möglicherweise Objekte im Schutzbereich zwar vorhanden sind, aber nicht erkannt werden, weil die Lichtintensität, die letztlich am Empfänger ankommt, zu niedrig ist. Hier zeigt sich eine grundsätzliche Schwierigkeit, die dem tastenden Messprinzip des Laserscanners bei der Erfüllung der Sicherheitsansprüche zugrunde liegt. Der Scanner gibt nämlich dann eine gefährliche Bewegung einer Maschine frei, wenn kein Signal aus dem Schutzfeld empfangen wird, und die Maschine wird nur dann gestoppt, wenn ein Objekt in dem Schutzfeld detektiert wird und demzufolge Licht empfangen wird. Somit kann auch eine schlechte Sicht zu dem Ergebnis "kein Licht - Schutzfeld frei" führen, was verhindert werden muss. Dies ist mit ein Hauptgrund, warum Sicherheits-Laserscanner bisher kaum in Outdoor-Anwendungen eingesetzt werden. Da FTS zwingend einen Kollisionsschutz benötigen, ist der Outdoor Einsatz eines FTS stark eingeschränkt.

Um das Problem der weichen Objekte in den Griff zu bekommen, wurden bisher bei Outdoor Einsätzen von Laserscannern externe Referenzziele eingesetzt, die der Laserscanner "sehen" muss. Der Einsatz von externen Zielen ist aber nicht nur sehr aufwändig, denn es müssen einerseits die Ziele bereitgestellt werden und andererseits die Ziele in den Laserscanner einprogrammiert werden. Es ist in FTS-Anwendungen auch kaum möglich externe Ziele zu verwenden, denn schließlich bewegt sich das FTS mit dem Laserscanner, so dass die externen Testziele stets in anderer Entfernung und Richtung vom Laserscanner aus gesehen werden und deshalb eine sinnvolle Auswertung nicht möglich ist.

Das Dokument DE 43 35 244 B4 betrifft ein Kamerasystem zur Sichtverbesserung in einem Fahrzeug. Das von einer Beleuchtungseinheit ausgesandte und reflektierte Licht wird von einer Kamera aufgenommen und als Bild dargestellt. Das durch die Beleuchtungseinheit ausgesandte Licht ist linear polarisiert. Durch ein vor der Kamera senkrecht zur Polarisation des ausgesandten Lichts stehendes Polarisationsfilter kann ein Geblendet-Werden der Kamera durch an Regen oder Nebel rückgestreutes Licht abgeschwächt werden.

Das Dokument DE 40 16 973 C1 und das Dokument US 2007/0279615 A1 offenbaren jeweils eine Vorrichtung gemäß dem Oberbegriff des Anspruchs 1 und gemäß dem Oberbegriff des Anspruchs 3 sowie ein Verfahren gemäß dem Oberbegriff des Anspruchs 13 und gemäß dem Oberbegriff des Anspruchs 14.

US 5,206,698 beschreibt ein Lidar, mit dem Partikel in der Atmosphäre nachgewiesen werden können. Hierzu umfasst das Lidar einen Sender, einen Empfänger und eine Auswertevorrichtung. Der Sender ist ein Laser, dessen ausgesandte, gepulste und linear polarisierte Strahlung im infraroten Wellenlängenbereich liegt. Der Empfänger umfasst vier Fotodioden, die parallel bzw. vertikal polarisiertes, an z.B. einer Nebelbank gestreutes Licht eines Strahlenbündels detektieren. Durch Auswertung der Signalverläufe der zugehörigen Empfangssignale kann festgestellt werden, ob die Sichttrübung durch Nebel, Schnee oder Regen hervorgerufen wird.

In Dokument US 1,113,888 ist offenbart, dass ein Laserscanner polarisiertes Licht aussenden und ein Analysator vorgesehen sein kann, um Daten bezüglich der Polarisationseigenschaften eines Objekts zu erhalten. Der Erfindung liegt die Aufgabe zugrunde, einen Laserscanner der eingangs genannten Art anzugeben, der für den Outdoor Einsatz geeignet ist, wobei auf externe Referenzziele verzichtet werden kann.

Diese Aufgabe wird durch einen Laserscanner mit den Merkmalen des Anspruchs 1 oder des Anspruchs 3 gelöst.

Der Laserscanner weist in an sich bekannter Weise eine Lichtablenkeinheit auf, mit der ein von einem Laser erzeugter Lichtstrahl in einem Schutzüberwachungsbereich gelenkt wird, so dass das Licht den Überwachungsbereich überstreicht. Als Lichtsendeeinheit wird ein Laser, z.B. ein Halbleiterdiodenlaser, eingesetzt.

Polarisiertes Licht, das auf Objekte mit einer zumindest im Wesentlichen diffus reflektierenden Oberfläche auftrifft, verliert seine Polarisation zumindest weitgehend. Bei Reflexion an Nebel, Regen und dergleichen ist dies hingegen nicht der Fall. Über die Auswertung der Polarisationsinformation des rückgestreuten Lichts kann daher zwischen einer Reflektion an zu erfassenden Objekten im Sinne der vorliegenden Erfindung, d.h. echten bzw. harten Objekten wie z.B. Körperteilen, Maschinenteilen, Wänden, Pfosten oder dergleichen einerseits, und einer Reflexion an Nebel, Regen, oder dergleichen andererseits, deren Tröpfchen, Tropfen oder Teilchen auch als weiche Objekte bezeichnet werden können, insbesondere mit Durchmessern in der Größenordnung der Lichtwellenlänge, unterschieden werden. In Sicherheits-Anwendungen sind harte Objekte grundsätzlich sicherheitskritisch und müssen erkannt werden. Das Vorhandensein weicher Objekte ist grundsätzlich unkritisch, bedeutet also keine Gefahr.

Die Erfindung beruht daher letztlich auf den physikalisch fundamental unterschiedlichen Prozessen, die den rückgestreuten Empfangssignalen zugrunde liegen. Zu erfassende Objekte im Sinne der vorliegenden Erfindung zeigen ein Streuverhalten für auftreffendes Licht, das näherungsweise mit der Theorie der Lambertschen Streuung beschrieben werden kann. Bei der Lambertschen Streuung ist das ausgesandte Licht nach der Reflexion nicht mehr polarisiert, sondern enthält vielmehr sämtliche Polarisationsrichtungen. Äußere Störeinflüsse wie Nebel oder dergleichen hingegen zeigen ein Streuverhalten, dass am besten mit der Mie Theorie beschrieben werden kann. Hier bleibt die Polarisation des ausgesandten Lichts auch nach einer Reflexion erhalten.

An zu erfassenden Objekten reflektiertes Licht ist demnach weitgehend unpolarisiert, so dass ein großer Anteil dieses Lichts, insbesondere z.B. ca. 50%, auch in dem Empfangssignal der detektierten orthogonalen Polarisationskomponente enthalten ist. An äußeren Störeinflüssen wie Nebel oder dergleichen rückgestreutes Licht hingegen ist in Richtung der ursprünglichen Polarisation des Sendelichtstrahls polarisiert.

Erfindungsgemäß enthält die zu der Polarisationsrichtung des Sendelichtstrahls orthogonale Polarisationskomponente des reflektierten Lichts daher keinen bzw. lediglich einen vergleichsweise geringen Beitrag von an Störeinflüssen reflektiertem Licht. Das Verhältnis von eigentlichem Nutzsignal, d.h. des Anteils, der auf einer Reflektion an einem Objekt beruht, zu Störsignal, d.h. des Anteils, der auf einer Reflexion an einem Störeinfluss beruht, in dem Empfangssignal der detektierten orthogonalen Polarisationskomponente kann daher erhöht werden. Somit können zumindest in dem Empfangssignal der detektierten orthogonalen Polarisationskomponente Objekte besser von bloßen Störeinflüssen differenziert werden. In dem Verlauf des Empfangssignals der detektierten parallelen Polarisationskomponente kann neben einem Signalanteil, der von an einem Objekt reflektiertem Licht stammt, auch ein signifikanter Signalanteil, der von an äußeren Störeinflüssen reflektiertem Licht stammt, enthalten sein.

Aus dem Verlauf des Empfangssignals der detektierten orthogonalen Polarisationskomponente des reflektierten Lichts kann daher, unabhängig von der zu der Polarisationsrichtung des Sendelichtstrahls parallelen Polarisationskomponente des reflektierten Lichts oder optional unter zusätzlicher Berücksichtigung des Verlaufs des Empfangssignals der parallelen Polarisationskomponente des reflektierten Lichts, eine Objekterfassung auch noch bei Sichtverhältnissen erfolgen, bei denen dies mit aus dem Stand der Technik bekannten Laserscannern bereits nicht mehr möglich ist, und zwar ohne dass hierfür eine externes Testziel erforderlich ist. Erfindungsgemäß können also auf äußeren Einflüssen beruhende Störsignale zumindest weitgehend ausgeblendet werden. Dies eröffnet mobilen Outdoor - Anwendungen die Realisierung.

Alternativ oder zusätzlich kann die Auswerteeinheit dafür ausgebildet sein, in zumindest einem der beiden Empfangssignalverläufe, insbesondere dem Empfangssignalverlauf der detektierten parallelen Polarisationskomponente, Anteile, die auf der Reflexion an einem Objekt beruhen, von Anteilen, die auf einer Reflexion an Störeinflüssen beruhen, zu unterscheiden.

Unter der zu der Polarisationsrichtung des Sendelichtstrahls orthogonalen Polarisationskomponente des im Überwachungsbereich reflektierten Lichts ist die Polarisationskomponente zu verstehen, deren Richtung senkrecht, zumindest im Wesentlichen senkrecht zu der Polarisationsrichtung des Sendelichtstrahls orientiert ist. Zusätzlich kann hierunter auch eine Polarisationskomponente zu verstehen sein, deren Richtung nicht um volle 90°, sondern lediglich um mehr als 45°, insbesondere 60° oder mehr, von der Polarisationsrichtung des Sendelichtstrahls abweicht, wobei die Erhöhung des vorgenannten Nutzsignal-Störsignal-Verhältnisses abhängig von dem jeweiligen Winkel allerdings entsprechend geringer ausfällt. Entsprechend ist unter der zu der Polarisationsrichtung des Sendelichtstrahls parallelen Polarisationskomponente des im Überwachungsbereich reflektierten Lichts die Polarisationskomponente zu verstehen, deren Richtung parallel, zumindest im Wesentlichen parallel zu der Polarisationsrichtung des Sendelichtstrahls orientiert ist. Zusätzlich kann hierunter auch eine Polarisationskomponente zu verstehen sein, deren Richtung um weniger als 45°, insbesondere 30° oder weniger, von der Polarisationsrichtung des Sendelichtstrahls abweicht.

Bei dem polarisierten Sendelichtstrahl handelt es sich um einen Sendelichtstrahl mit definierter Polarisation. Insbesondere kann es sich dem polarisierten Sendelichtstrahl um einen linear polarisierten Sendelichtstrahl oder um einen zirkular polarisierten Sendelichtstrahl handeln.

Für den Fall zirkular polarisierten Sendelichts handelt es sich bei der orthogonalen Polarisationskomponente des reflektierten Lichts im Sinne der vorliegenden Anmeldung um diejenige Polarisationskomponente, die die zu der Drehrichtung des Sendelichtstrahls entgegengerichtete Drehrichtung aufweist, und bei der parallelen Polarisationskomponente des reflektierten Lichts um diejenige Polarisationskomponente, die dieselbe Drehrichtung wie der Sendelichtstrahls aufweist. Bei einer spiegelnden Reflektion von zirkular polarisiertem Licht an einem Objekt wird die Drehrichtung der Polarisation des Lichts umgekehrt bzw. gedreht, bei einer diffusen Reflexion bzw. Remission geht die Polarisation verloren.

Der polarisierte Sendelichtstrahl kann mit Hilfe eines entsprechend ausgestalteten Lichtsenders direkt oder eines dem Lichtsender in Laufrichtung des ausgesandten Lichts nachgeschaltetes Filter oder sonstiges geeignetes optisches Bauelement erzeugt werden.

Um die zu der Polarisationsrichtung des Sendelichtstrahls orthogonale Polarisationskomponente des im Überwachungsbereich reflektierten Lichts zu detektieren, kann die Lichtempfangseinheit ein in Laufrichtung des reflektierten Lichts vor dem wenigstens einen Lichtempfänger angeordnetes Polarisationsfilter umfassen, das orthogonal zu der Polarisationsrichtung des Sendelichtstrahls ausgerichtet ist. Die Detektion einer zu der Polarisationsrichtung des Sendelichtstrahls parallelen Polarisationskomponente des reflektierten Lichts ist dann - ohne weitere Maßnahmen - in der Regel nicht mehr möglich.

Um die zu der Polarisationsrichtung des Sendelichtstrahls parallele Polarisationskomponente des im Überwachungsbereich reflektierten Lichts zu detektieren, kann die Lichtempfangseinheit ein in Laufrichtung des reflektierten Lichts vor dem wenigstens einen Lichtempfänger angeordnetes Polarisationsfilter umfassen, das parallel zu der Polarisationsrichtung des Sendelichtstrahls ausgerichtet ist. Die Detektion einer zu der Polarisationsrichtung des Sendelichtstrahls orthogonalen Polarisationskomponente des reflektierten Lichts ist dann - ohne weitere Maßnahmen - in der Regel nicht mehr möglich.

Die Auswerteeinheit kann dafür ausgebildet sein, unterschiedliche Maxima und/oder unterschiedliche Flankensteigungen in zumindest einem der beiden Verläufe, insbesondere dem Empfangssignalverlauf der detektierten parallelen Polarisationskomponente, zu erkennen, insbesondere um Anteile, die auf einer Reflexion an einem Objekt beruhen, von Anteilen, die auf einer Reflexion an Störeinflüssen beruhen, zu unterscheiden.

Die Auswerteeinheit kann auch dafür ausgebildet sein, die beiden Verläufe gemeinsam auszuwerten, insbesondere miteinander zu vergleichen.

Insbesondere kann die Auswerteeinheit dafür ausgebildet sein, durch äußere Einflüsse verursachte Störsignale in zumindest einem der beiden Verläufe und/oder eine Sichttrübung zu erkennen. Beispielsweise kann ein Vergleich der beiden Verläufe ergeben, dass der zeitliche Verlauf des Empfangssignals der parallelen Polarisationskomponente zu einem bestimmten Zeitpunkt bzw. innerhalb eines bestimmten Zeitintervalls ein Maximum aufweist, das in dem zeitlichen Verlauf des Empfangssignals der orthogonalen Polarisationskomponente nicht oder nur abgeschwächt auftritt, woraus auf eine Sichtstörung geschlossen werden kann. Darüber hinaus kann, um ein möglichst hohes Nutzsignal-zu-Störsignal-Verhältnis zu erhalten, der Bewertung, ob in dem Überwachungsbereich ein Objekt vorhanden ist, ein aus den beiden Empfangsverläufen kombinierter Empfangsverlauf zugrunde gelegt werden, für den in Bereichen, in denen in beiden Empfangssignalen ein hinreichend ausgebildetes Maximum auftritt, die beiden Empfangssignale miteinander addiert werden, und in Bereichen, in denen zumindest im Wesentlichen lediglich in dem Empfangssignal der parallelen Polarisationskomponente ein Maximum auftritt, lediglich das Empfangssignal der orthogonalen Polarisationskomponente verwendet wird.

Darüber hinaus kann die Auswerteeinheit dafür ausgebildet sein, in Abhängigkeit von der Auswertung zumindest eines der beiden Verläufe einen Wert für eine Lichtdämpfung, eine Lichtabsorption und/oder eine insbesondere atmosphärische Sichtweite zu bestimmen, insbesondere in Abhängigkeit von der Ausprägung eines zumindest im Wesentlichen lediglich in dem Empfangssignal der parallelen Polarisationskomponente auftretenden Maximums. Dies kann beispielsweise durch einen Vergleich der Höhe eines lediglich in dem Empfangssignal der parallelen Polarisationskomponente auftretenden Maximums mit der ggf. addierten Höhe eines in beiden Empfangssignalen auftretenden Maximums erfolgen.

Zusätzlich oder alternativ kann die Auswerteeinheit dafür ausgebildet sein, in Abhängigkeit von der Auswertung zumindest eines der beiden Verläufe die Lichtstärke bzw. die Signaldynamik des Sendelichtstrahls einzustellen. Wird festgestellt, dass eine Sichttrübung vorliegt, kann die Sendeleistung der Lichtsendeeinheit entsprechend der Stärke der Sichttrübung erhöht werden, um zu gewährleisten, dass trotz Dämpfung des ausgesandten und reflektierten Lichts durch die Sichttrübung noch ausreichend von dem zu erfassenden Objekt rückgestreutes Licht an der Lichtempfangseinheit ankommen kann. Das durch die Sichttrübung verursachte, entsprechend erhöhte Störsignal in den Empfangssignalverläufen kann dabei wie vorstehend erläutert ausgeblendet werden. Neben der Unterdrückung des durch eine Sichttrübung verursachten Störsignals kann somit auch der mit der Sichttrübung verbundene Dämpfungseffekt auf das ausgesandte und reflektierte Licht kompensiert werden.

Um sowohl die zu der Polarisationsrichtung des Sendelichtstrahls orthogonale Polarisationskomponente des reflektierten Lichts als auch die die zu der Polarisationsrichtung des Sendelichtstrahls parallele Polarisationskomponente des reflektierten Lichts zu detektieren, kann die Lichtempfangseinheit einen in Laufrichtung des reflektierten Lichts vor dem wenigstens einen Lichtempfänger angeordneten Polarisationsstrahlteiler umfassen, der das reflektierte Licht in die orthogonale Polarisationskomponente und die parallele Polarisationskomponente zerlegt.

Nach einer anderen Ausbildung der Erfindung umfasst die Lichtsendeeinheit zwei Lichtsender, die jeweils dafür ausgebildet sind, einen polarisierten Sendelichtstrahls in den Überwachungsbereich auszusenden. Dabei kann pro Lichtsender lediglich die zu der Polarisationsrichtung des Sendelichtstrahls orthogonale Polarisationskomponente oder lediglich die zu der Polarisationsrichtung des Sendelichtstrahls parallele Polarisationskomponente ausgewertet werden, oder es können beide Polarisationskomponenten ausgewertet werden, wie es jeweils vorstehend beschrieben ist. Hierdurch kann die Objekterfassung und/oder Sichttrübungserkennung noch sensitiver und/oder robuster gestaltet werden. Dabei ist es von Vorteil, wenn die Polarisationsrichtungen der beiden Sendelichtstrahlen orthogonal zueinander ausgerichtet sind und/oder die Wellenlänge und/oder das Frequenzspektrum der beiden Sendelichtstrahlen identisch ist. Hierdurch können Probleme, die durch unterschiedliche Reflektivitäten verschiedener Wellenlängen entstehen könnten, vermieden werden.

Der wenigstens eine Lichtempfänger kann als ein ortsauflösender Lichtempfänger ausgebildet sein, zwei räumlich voneinander getrennte Empfangsbereiche aufweisen und/oder zwei separate Lichtempfänger aufweisen, um die orthogonale Polarisationskomponente des reflektierten Lichts und die parallele Polarisationskomponente des reflektierten Lichts unabhängig voneinander zu detektieren.

Die vorliegende Erfindung betrifft weiterhin ein Verfahren zur Erfassung von Objekten in einem Überwachungsbereich mit den Merkmalen des Anspruchs 13 oder des Anspruchs 14.

Bevorzugte Ausführungsformen des erfindungsgemäßen Verfahrens ergeben sich in analoger Weise aus den Weiterbildungen des erfindungsgemäßen Laserscanners.

Vorteilhafte Ausgestaltungen der Erfindung sind in den Unteransprüchen, der Beschreibung und der Zeichnung beschrieben.

Ein nicht beschränkendes Ausführungsbeispiel der Erfindung ist in der Zeichnung dargestellt und wird nachfolgend beschrieben. Es zeigen, jeweils in schematischer Darstellung,
- Fig. 1: eine schematische Darstellung eines Laserscanners gemäß der Erfindung und Funktionsprinzip, und
- Fig. 2: Diagramme von typischen Verläufen von zwei Polarisationskomponenten von im Überwachungsbereich des Laserscanners reflektiertem Licht.

Ein im Folgenden beschriebener Sicherheits-Laserscanner dient zum Beispiel zur Überwachung auf unbefugten Zugriff eines Überwachungsbereichs oder zur Überwachung des Bereichs vor einem autonom fahrenden Fahrzeug. Befindet sich ein unzulässiges Objekt, zum Beispiel das Bein einer Bedienperson, in dem Überwachungsbereich, so wird dies von dem beschriebenen Scanner detektiert und ein Sicherheitssignal, das ein Warn- oder ein Abschaltsignal sein kann, ausgegeben und es werden entsprechende Maßnahmen eingeleitet, die die Gefahr verhindern, z.B. wird die Gefahr bringende Bewegung der Maschine gestoppt oder zumindest abgebremst.

Der Begriff des "unzulässigen Objektes" wird im vorliegenden Text für unzulässige Objekte im Schutzfeld verwendet, die detektiert werden müssen, um eine Gefahr, z.B. einen Zusammenstoß zu verhindern. Insbesondere können damit zum Beispiel gefährdete Körperteile von Bedienpersonen gemeint sein.

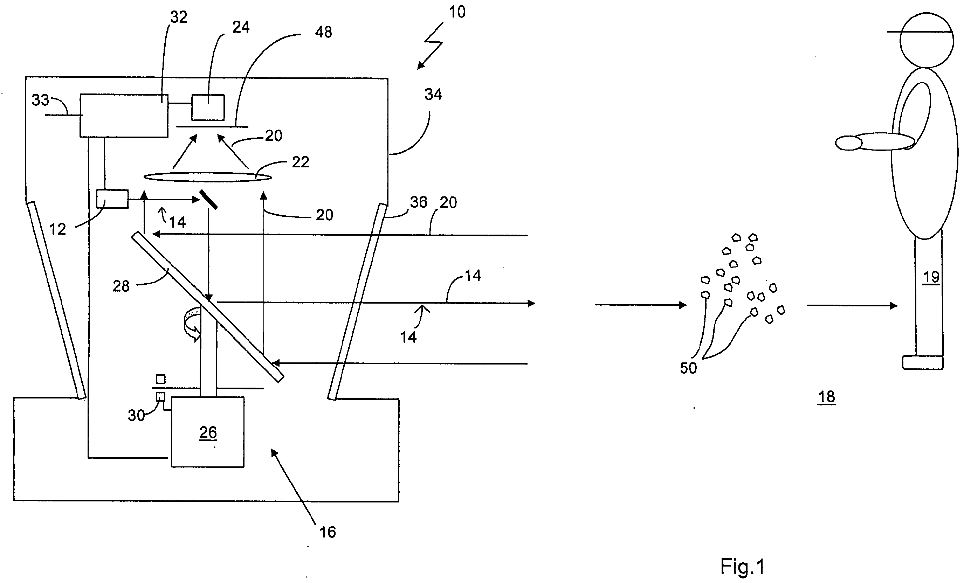

Fig. 1 zeigt schematisch den Aufbau einer Ausführungsform eines Sicherheits-Laserscanners 10. Ein von einem Lichtsender 12 einer Lichtsendeeinheit erzeugter Laserlichtstrahl 14, der aus einzelnen Lichtpulsen besteht, wird über eine Lichtablenkeinheit 16 in einen einen Überwachungsbereich 18 einschließenden Sichtbereich gelenkt und dort von einem gegebenenfalls vorhandenen Objekt 19 remittiert. Der Sichtbereich umfasst den gesamten Öffnungswinkel des Scanners 10. Remittiertes Licht 20 gelangt wieder zurück zum Laserscanner 10 und wird dort über die Ablenkeinheit 16 und mittels einer Empfangsoptik 22 von einem Lichtempfänger 24 detektiert. Die Lichtablenkeinheit 16 ist in der Regel drehbar ausgestaltet, wobei ein Motor 26 einen Drehspiegel 28 kontinuierlich rotiert. Die jeweilige Winkelstellung des Drehspiegels 28 wird über einen Encoder 30 erfasst. Der von dem Lichtsender 12 erzeugte Lichtstrahl 14 überstreicht somit den durch die Rotationsbewegung erzeugten Sichtbereich, in dem sich der Überwachungsbereich 18 befindet. Wird ein vom Lichtempfänger 24 empfangenes reflektiertes Lichtsignal 20 aus dem Sichtbereich 18 empfangen, so kann aus der Winkelstellung der Ablenkeinheit 16 auf die Winkellage des Objektes im Sichtbereich 18 geschlossen werden. Zusätzlich wird die Laufzeit der einzelnen Laserlichtpulse des Sendelichts 14 vom Aussenden bis zum Empfang einer Reflexion an dem Objekt, überwacht und aus der Lichtlaufzeit unter Verwendung der Lichtgeschwindigkeit auf die Entfernung des Objektes vom Laserscanner 10 geschlossen. Damit ist die Position der gemessenen Reflexion in Polarkoordinaten ermittelt.

Diese Auswertung erfolgt in einer Auswerteeinheit 32, die dafür mit dem Lichtsender 12, dem Lichtempfänger 24, dem Motor 26 und Encoder 30 verbunden ist. Mit den Winkel- und Entfernungsangaben lässt sich der Ort des Objektes 19 ermitteln und auf diese Weise der Überwachungsbereiche 18 vollständig überwachen. Der Überwachungsbereich 18 ist in seinen Abmessungen durch entsprechende Parameter definiert, die in der Auswerteeinheit 32 in einem Speicher abgelegt sind. Befindet sich im Überwachungsbereich 18 ein unzulässiges Objekt 19, so kann von der Auswerteeinheit 32 ein entsprechendes Objektfeststellungssignal an einem Ausgang des Laserscanners 10 über eine Leitung 33 ausgegeben werden und somit letztendlich ein Sicherheitssignal ausgegeben werden, um zum Beispiel einen Stopp einer Gefahr bringenden Maschine herbeizuführen.

Alle genannten Funktionskomponenten sind in einem Gehäuse 34 angeordnet, das frontseitig, also im Bereich des Lichtaus- und Lichteintritts, eine Frontscheibe 36 aufweist. Die Frontscheibe 36 ist zur Vermeidung von direkten Reflexionen in den Empfänger schräg gestellt, so dass der Winkel zwischen Lichtstrahl 14 und Frontscheibe 36 ungleich 90° beträgt.

Das bisher Beschriebene erläutert das Grundprinzip und den Grundaufbau eines Laserscanners unter zusätzlicher Auswertung der Lichtlaufzeit. Der erfindungsgemäße Sicherheits-Laserscanner umfasst nun weitere Merkmale und Eigenschaften, die einen Outdoor Einsatz ermöglichen.

Erfindungsgemäß ist die Lichtsendeeinheit z.B. derart ausgestaltet, dass der Lichtsender 12 der Lichtsendeeinheit Sendelichtstrahlen 14 aussendet, die linear polarisiert sind. Darüber hinaus wird das in dem Überwachungsbereich 18 reflektierte, zu dem Laserscanner 10 zurückkehrende Licht 20 mittels eines Polarisationsstrahlteilers 48 in eine zu der Polarisationsrichtung des Sendelichtstrahls 14 orthogonale Polarisationskomponente und eine zu der Polarisationsrichtung des Sendelichtstrahls 14 parallele Polarisationskomponente zerlegt, wobei die beiden Polarisationskomponenten räumlich getrennt voneinander auf dem Lichtempfänger 24 auftreffen, und dort unabhängig voneinander detektiert werden.

Das polarisierte Licht kann z.B. mit einer entsprechend polarisierten Laserdiode oder durch Vorschaltung eines Polarisationsfilters erzeugt werden.

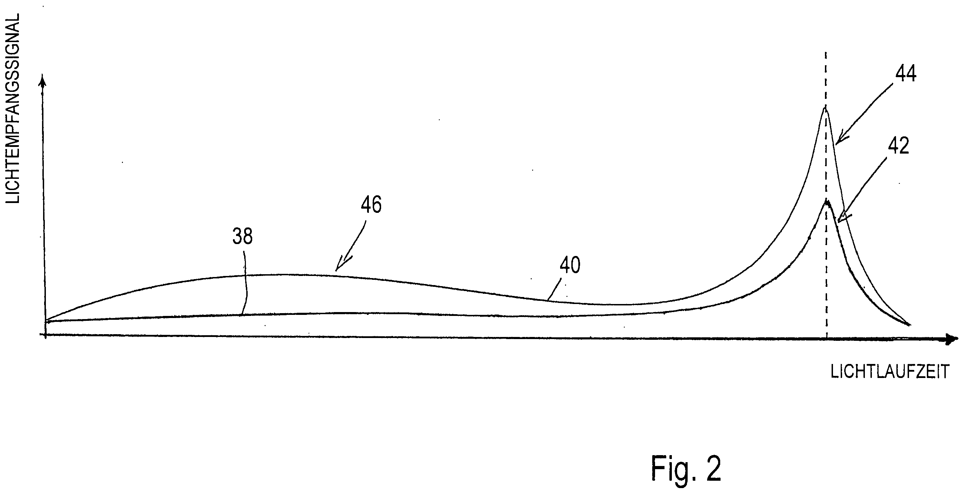

In Fig. 2 sind den beiden Polarisationskomponenten entsprechende, von dem Lichtempfänger 24 erzeugte zugehörige orthogonale und parallele Empfangssignale 38 und 40 des reflektierten Lichts 20 dargestellt. Ein Empfangssignalverlauf 38, 40 ergibt sich, wenn zum Zeitpunkt t = 0 ein Laserpuls ausgesandt und das Empfangssignal über die Zeit aufgetragen wird. Die beiden gezeigten Empfangssignale 38, 40 geben dabei typische Verläufe wieder, wie sie bei einer wie in Fig. 1 exemplarisch dargestellten Situation entstehen, in der zwischen dem Laserscanner 10 und dem zu detektierenden Objekt 19 in der Luft feinverteilte Nebel-Wassertröpfchen 50 vorhanden sind.

Sowohl das Empfangssignal 38 der orthogonalen Polarisationskomponente als auch das Empfangssignal 40 der parallelen Polarisationskomponente des reflektierten Lichts 20 weisen jeweils ein ausgeprägtes Maximum 42, 44 auf, das jeweils auf einer Reflexion des ausgesandten Lichts 14 an dem Objekt 19 beruht. Das orthogonale Empfangssignal 38 weist keine oder nur schwach ausgeprägte weitere Maxima auf. In dem parallelen Empfangssignal 40 hingegen ist zusätzlich ein vergleichsweise breites und flaches Maximum 46 enthalten, das auf die Reflektion des ausgesandten Lichts 14 an den Wassertröpfchen 50 des Nebels zurückgeht. Durch ein entsprechend ausgebildetes Maximum 46, insbesondere bei dichtem Nebel, kann die Erfassung des eigentlich zu erfassenden Objekts 19 daher entscheidend gestört werden. Dies liegt insbesondere daran, dass das Maximum 44 gegenüber einer Situation ohne Nebel abgeschwächt ist, so dass das Objekt 19 nicht als solches erkannt wird, oder dass das Maximum 46 fehlerhaft als ein zu erfassendes Objekt eingestuft wird.

Dieser Unterschied zwischen den beiden Empfangssignalen 38, 40 ist darauf zurückzuführen, dass das Laserlicht 14 an einem festen Objekt 19 remittiert wird, d.h. mit Polarisationskomponenten aller Polarisationsrichtungen reflektiert wird (Lambertsche Streuung), wohingegen bei einer Reflexion an weichen Objekten wie z.B. Wassertröpfchen 50 die Polarisation des Sendelichtstrahls 14 zumindest weitgehend erhalten bleibt (Mie Streuung). Das an Wassertröpfchen 50 reflektierte Licht enthält daher keine bzw. kaum Lichtanteile, die eine Polarisation besitzen, die orthogonal zu der Polarisationsrichtung des ausgesandten Lichts 14 orientiert sind. Das orthogonale Empfangssignal 38 weist daher kein dem Maximum 46 des parallelen Empfangssignals 40 entsprechendes Störsignal auf.

Da das orthogonale Empfangssignal 38 das durch den Nebel 50 oder durch andere ähnliche sichtbehindernde äußere Einflüsse verursachte Störsignal 46 nicht aufweist, kann eine sichere Objektdetektion ausschließlich anhand des orthogonalen Empfangssignals 38 durchgeführt werden.

In einer anderen Variante können die beiden detektierten Empfangssignale 38, 40 jedoch auch miteinander verglichen werden. Der Vergleich kann dahingehend erfolgen, dass bei der Bewertung, ob von dem ausgesandten Licht 14 ein Objekt 19 erfasst wurde, die beiden Empfangssignalverläufe 38, 40 in Bereichen, in denen sie jeweils ein letztlich gemeinsames Maximum 42, 44 aufweisen, addiert werden, und in Bereichen, in denen lediglich in dem parallelen Empfangssignal 40 ein Maximum 46 enthalten ist, das parallele Empfangssignal 40 ignoriert wird.

Insbesondere kann man aus einem Vergleich der beiden Empfangssignalverläufe 38, 40 erkennen, dass überhaupt Nebel vorhanden ist, da das auf Nebel 50 zurückzuführende Störsignal 46 lediglich in einem der beiden Empfangssignalverläufe 38, 40 auftritt. Insbesondere kann anhand der Höhe des Maximums 46 erkannt werden, wie dicht der Nebel 50 ist, d.h. wie stark also die Sichttrübung ist. Die Erkennung und Auswertung der Sichttrübung erfolgt durch die Auswerteeinheit 32. Da grundsätzlich auch der Grad der Sichttrübung bestimmbar ist, kann bei Unterschreiten einer vorgegebenen minimalen Sichtweite ein Sicherheitssignal an dem Ausgang über die Leitung 33 ausgeben werden.

Grundsätzlich lässt sich auch aus dem parallelen Empfangssignalverlauf 40 allein beurteilen, ob ein Objekt 19 detektiert wurde. Beispielsweise kann anhand der Flankensteilheit des Maximums 44 darauf geschlossen werden, dass die zugehörige Reflexion an einem Objekt 19 stattfindet, denn nur ein Objekt 19 zeigt eine solch steile Flanke. Gegebenenfalls lässt sich alternativ oder zusätzlich auch der Maximalwert der Reflexion des Objekts 19 mit dem Maximalwert der Nebelreflexion 46 vergleichen und daraus eine Unterscheidung zwischen Reflexion an einem Objekt 19 und Nebel 50 ableiten. Dies gilt insbesondere dann, wenn man berücksichtigt, dass eine Reflexion an einem Objekt 19 in der Regel immer am Ende eine Empfangssignalverlaufs auftritt.

Gemäß einer anderen Ausbildung kann auch zirkular polarisiertes Licht verwendet werden. Beispielsweise kann ein von dem Lichtsender ausgesandter linear polarisierter Sendelichtstrahl mittels eines λ/4-Plättchens des Laserscanners in zirkular polarisiertes Licht umgewandelt werden. Bei Reflektion am Nebel wird die Polarisationsrichtung des vom Laserscanner ausgesandten, zirkular polarisierten Lichts dann gedreht, d.h. von links zirkular polarisiert nach rechts zirkular polarisiert, oder umgekehrt. Nach erneutem Durchlauf durch das λ/4-Plättchen weist das reflektierte Licht dann eine lineare Polarisation auf, deren Richtung orthogonal zu der linearen Polarisationsrichtung des von dem Lichtsender ausgesandten Sendelichtstrahls orientiert ist.

Durch die vorliegende Erfindung können bei Outdoor-Anwendungen im Überwachungsbereich des Laserscanners vorhandene Objekte zuverlässiger erkannt und gleichzeitig das Vorliegen und ggf. die Stärke einer Sichttrübung, beispielsweise von Nebel bzw. eine Nebeldichte, erkannt werden.

### Bezugszeichenliste

- 10: Laserscanner
- 12: Lichtsender
- 14: Sendelichtstrahl
- 16: Lichtablenkeinheit
- 18: Überwachungsbereich
- 19: Objekt
- 20: reflektiertes Licht
- 22: Empfangsoptik
- 24: Lichtempfänger
- 26: Motor
- 28: Drehspiegel
- 30: Encoder
- 32: Auswerteeinheit
- 33: Leitung
- 34: Gehäuse
- 36: Frontscheibe
- 38: orthogonal orientiertes Empfangssignal
- 40: parallel orientiertes Empfangssignal
- 42: Maximum
- 44: Maximum
- 46: Störsignal
- 48: Polarisationsstrahlteiler
- 50: Nebeltröpfchen

## Patentansprüche

1. Laserscanner (10), insbesondere Sicherheits-Laserscanner, nach dem Funktionsprinzip des Lichtlaufzeitverfahrens zur Erfassung von Objekten (19) in einem Überwachungsbereich (18), mit
einer Lichtsendeeinheit mit wenigstens einem Lichtsender (12) zum Aussenden eines polarisierten Sendelichtstrahls (14) in den Überwachungsbereich (19),
einer Lichtempfangseinheit (24, 48) mit wenigstens einem Lichtempfänger (24) zum Detektieren der zu der Polarisationsrichtung des Sendelichtstrahls (14) orthogonalen Polarisationskomponente des im Überwachungsbereich (19) reflektierten Lichts (20) und zum Erzeugen eines der detektierten orthogonalen Polarisationskomponente entsprechenden Empfangssignals (38), und
einer Auswerteeinheit (32), die dafür ausgebildet ist, den zeitlichen Verlauf des Empfangssignals (38) der detektierten orthogonalen Polarisationskomponente auszuwerten,
**dadurch gekennzeichnet,**
**dass** die Auswerteeinheit (32) dafür ausgebildet ist, eine Objekterfassung ausschließlich anhand des Empfangssignals (38) der detektierten orthogonalen Polarisationskomponente durchzuführen.

2. Laserscanner nach Anspruch 1,
**dadurch gekennzeichnet,**
**dass** die Lichtempfangseinheit (24, 48) ein in Laufrichtung des reflektierten Lichts (20) vor dem wenigstens einen Lichtempfänger (24) angeordnetes Polarisationsfilter umfasst, das orthogonal zu der Polarisationsrichtung des Sendelichtstrahls (14) ausgerichtet ist.

3. Laserscanner (10), insbesondere Sicherheits-Laserscanner, nach dem Funktionsprinzip des Lichtlaufzeitverfahrens zur Erfassung von Objekten (19) in einem Überwachungsbereich (18), mit
einer Lichtsendeeinheit mit wenigstens einem Lichtsender (12) zum Aussenden eines polarisierten Sendelichtstrahls (14), der aus einzelnen Lichtpulsen besteht, in den Überwachungsbereich (19), und
einer Lichtempfangseinheit (24, 48) mit wenigstens einem Lichtempfänger (24) zum Detektieren der zu der Polarisationsrichtung des Sendelichtstrahls (14) orthogonalen Polarisationskomponente des im Überwachungsbereich (19) reflektierten Lichts (20) und der zu der Polarisationsrichtung des Sendelichtstrahls (14) parallelen Polarisationskomponente des im Überwachungsbereich (19) reflektierten Lichts (20) und zum Erzeugen eines der detektierten orthogonalen Polarisationskomponente entsprechenden Empfangssignals (38) und eines der detektierten parallelen Polarisationskomponente entsprechenden Empfangssignals (40),
**gekennzeichnet durch**
eine Auswerteeinheit (32), die dafür ausgebildet ist, den zeitlichen Verlauf des Empfangssignals (38) der detektierten orthogonalen Polarisationskomponente eines Lichtpulses und den zeitlichen Verlauf des Empfangssignals (40) der detektierten parallelen Polarisationskomponente des Lichtpulses auszuwerten, wobei die Auswerteeinheit (32) dafür ausgebildet ist, die beiden Verläufe (38, 40) gemeinsam auszuwerten.

4. Laserscanner nach Anspruch 3,
**dadurch gekennzeichnet,**
**dass** die Auswerteeinheit (32) dafür ausgebildet ist, unterschiedliche Maxima (42, 44, 46) und/oder unterschiedliche Flankensteigungen in dem Empfangssignalverlauf (40) der detektierten parallelen Polarisationskomponente zu erkennen.

5. Laserscanner nach Anspruch 3 oder 4,
**dadurch gekennzeichnet,**
**dass** die Auswerteeinheit (32) dafür ausgebildet ist, die beiden Verläufe (38, 40) miteinander zu vergleichen.

6. Laserscanner nach zumindest einem der Ansprüche 3 bis 5,
**dadurch gekennzeichnet ,**
**dass** die Auswerteeinheit (32) dafür ausgebildet ist, in Abhängigkeit von der Ausprägung eines lediglich in dem Empfangssignal (40) der parallelen Polarisationskomponente auftretenden Maximums einen Wert für eine Lichtdämpfung, eine Lichtabsorption und/oder eine Sichtweite zu bestimmen.

7. Laserscanner nach zumindest einem der Ansprüche 3 bis 6,
**dadurch gekennzeichnet,**
**dass** die Auswerteeinheit (32) dafür ausgebildet ist, in Abhängigkeit von der Auswertung zumindest eines der beiden Verläufe (38, 40) die Lichtstärke des Sendelichtstrahls (14) einzustellen.

8. Laserscanner nach zumindest einem der Ansprüche 3 bis 7,
**dadurch gekennzeichnet,**
**dass** die Lichtempfangseinheit (24, 48) einen in Laufrichtung des reflektierten Lichts (20) vor dem wenigstens einen Lichtempfänger (24) angeordneten Polarisationsstrahlteiler (48) umfasst, der das reflektierte Licht (20) in die orthogonale Polarisationskomponente und die parallele Polarisationskomponente zerlegt.

9. Laserscanner nach zumindest einem der Ansprüche 3 bis 8,
**dadurch gekennzeichnet,**
**dass** die Lichtsendeeinheit zwei Lichtsender umfasst, die jeweils dafür ausgebildet sind, einen polarisierten Sendelichtstrahl in den Überwachungsbereich (18) auszusenden.

10. Laserscanner nach Anspruch 9,
**dadurch gekennzeichnet,**
**dass** die Polarisationsrichtungen der beiden Sendelichtstrahlen orthogonal zueinander ausgerichtet sind.

11. Laserscanner nach Anspruch 9 oder 10,
**dadurch gekennzeichnet,**
**dass** die Wellenlänge und/oder das Frequenzspektrum der beiden Sendelichtstrahlen identisch ist.

12. Laserscanner nach zumindest einem der Ansprüche 3 bis 11,
**dadurch gekennzeichnet,**
**dass** der wenigstens eine Lichtempfänger (24) als ein ortsauflösender Lichtempfänger ausgebildet ist und/oder zwei räumlich voneinander getrennte Empfangsbereiche aufweist, um die orthogonale Polarisationskomponente des reflektierten Lichts (20) und die parallele Polarisationskomponente des reflektierten Lichts (20) unabhängig voneinander zu detektieren.

13. Verfahren zur Erfassung von Objekten in einem Überwachungsbereich, bei dem
ein polarisierter Sendelichtstrahls in den Überwachungsbereich ausgesendet wird,
die zu der Polarisationsrichtung des Sendelichtstrahls orthogonale Polarisationskomponente des aus dem Überwachungsbereich reflektierten Lichts detektiert und ein der detektierten orthogonalen Polarisationskomponente entsprechendes Empfangssignal erzeugt wird, und
der zeitliche Verlauf des Empfangssignals der detektierten orthogonalen Polarisationskomponente ausgewertet wird,
**dadurch gekennzeichnet,**
**dass** eine Objekterfassung ausschließlich anhand des Empfangssignals der detektierten orthogonalen Polarisationskomponente durchgeführt wird.

14. Verfahren zur Erfassung von Objekten in einem Überwachungsbereich, bei dem
ein polarisierter Sendelichtstrahl, der aus einzelnen Lichtpulsen besteht, in den Überwachungsbereich ausgesendet wird, und
die zu der Polarisationsrichtung des Sendelichtstrahls orthogonale Polarisationskomponente des aus dem Überwachungsbereich reflektierten Lichts und die zu der Polarisationsrichtung des Sendelichtstrahls parallele Polarisationskomponente des im Überwachungsbereich reflektierten Lichts detektiert und ein der detektierten orthogonalen Polarisationskomponente entsprechendes Empfangssignal und ein der detektierten parallelen Polarisationskomponente entsprechendes Empfangssignals erzeugt wird,
**dadurch gekennzeichnet,**
**dass** der zeitliche Verlauf des Empfangssignals der detektierten orthogonalen Polarisationskomponente eines Lichtpulses und der zeitliche Verlauf des Empfangssignals der detektierten parallelen Polarisationskomponente des Lichtpulses ausgewertet wird, wobei die beiden Verläufe gemeinsam ausgewertet werden.

## Claims

1. A laser scanner (10), in particular a safety laser scanner, in accordance with the operating principle of the time of flight process for detecting objects (19) in a monitored zone (18), comprising
a light transmission unit having at least one light transmitter (12) for transmitting a polarized transmitted light beam (14) into the monitored zone (19);
a light reception unit (24, 48) having at least one light receiver (24) for detecting the polarization component of the light (20) reflected in the monitored zone (19) which is orthogonal to the polarization direction of the transmitted light beam (14) and for generating a received signal (38) corresponding to the detected orthogonal polarization component; and
an evaluation unit (32) which is configured to evaluate the time curve of the received signal (38) of the detected orthogonal polarization component,
**characterized in that**
the evaluation unit (32) is configured to carry out an object detection solely based on the received signal (38) of the detected orthogonal polarization component.

2. A laser scanner in accordance with claim 1,
**characterized in that**
the light reception unit (24, 48) comprises a polarization filter which is arranged in front of the at least one light receiver (24) in the propagation direction of the reflected light (20) and which is aligned orthogonally to the polarization direction of the transmitted light beam (14).

3. A laser scanner (10), in particular a safety laser scanner, in accordance with the operating principle of the time of flight process for detecting objects (19) in a monitored zone (18), comprising
a light transmission unit having at least one light transmitter (12) for transmitting a polarized transmitted light beam (14) which comprises individual light pulses into the monitored zone (19); and
a light reception unit (24, 48) having at least one light receiver (24) for detecting the polarization component of the light (20) reflected in the monitored zone (19) which is orthogonal to the polarization direction of the transmitted light beam (14) and for detecting the polarization component of the light (20) reflected in the monitored zone (19) which is parallel to the polarization direction of the transmitted light beam (14) and for generating a received signal (38) corresponding to the detected orthogonal polarization component and for generating a received signal (40) corresponding to the detected parallel polarization component, **characterized by**
an evaluation unit (32) which is configured to evaluate the time curve of the received signal (38) of the detected orthogonal polarization component of a light pulse and the time curve of the received signal (40) of the detected parallel polarization component of the light pulse, with the evaluation unit (32) being configured to evaluate the two curves (38, 40) together.

4. A laser scanner in accordance with claim 3,
**characterized in that**
the evaluation unit (32) is configured to recognize different maxima (42, 44, 46) and/or different flank gradients in the received signal curve (40) of the detected parallel polarization component.

5. A laser scanner in accordance with claim 3 or claim 4,
**characterized in that**
the evaluation unit (32) is configured to compare the two courses (38, 40) with one another.

6. A laser scanner in accordance with at least one of the claims 3 to 5,
**characterized in that**
the evaluation unit (32) is configured to determine a value for a light damping, a light absorption and/or a visual range in dependence on the characteristic of a maximum only occurring in the received signal (40) of the parallel polarization component.

7. A laser scanner in accordance with at least one of the claims 3 to 6,
**characterized in that**
the evaluation unit (32) is configured to set the luminous intensity of the transmitted light beam (14) in dependence on the evaluation of at least one of the two curves (38, 40).

8. A laser scanner in accordance with at least one of the claims 3 to 7,
**characterized in that**
the light reception unit (24, 48) comprises a polarization beam splitter (48) which is arranged in front of the at least one light receiver (24) in the propagation direction of the reflected light (20) and which splits the reflected light (20) into the orthogonal polarization component and the parallel polarization component.

9. A laser scanner in accordance with at least one of the claims 3 to 8,
**characterized in that**
the light transmission unit comprises two light transmitters which are each configured to transmit a polarized transmitted light beam into the monitored zone (18).

10. A laser scanner in accordance with claim 9,
**characterized in that**
the polarization directions of the two transmitted light beams are aligned orthogonally to one another.

11. A laser scanner in accordance with claim 9 or claim 10,
**characterized in that**
the wavelength and/or the frequency spectrum of the two transmitted light beams is identical.

12. A laser scanner in accordance with at least one of the claims 3 to 11,
**characterized in that**
the at least one light receiver (24) is configured as a spatially resolving light receiver and/or has two reception zones spatially separate from one another to detect the orthogonal polarization component of the reflected light (20) and the parallel polarization component of the reflected light (20) independently of one another.

13. A method for detecting objects in a monitored zone, in which
a polarized transmitted light beam is transmitted into the monitored zone;
the polarization component of the light reflected from the monitored zone which is orthogonal to the polarization direction of the transmitted light beam and a received signal corresponding to the detected orthogonal polarization component are generated; and
the time curve of the received signal of the detected orthogonal polarization component is evaluated,
**characterized in that**
an object detection is carried out solely based on the received signal of the detected orthogonal polarization component.

14. A method for detecting objects in a monitored zone, in which
a polarized transmitted light beam which comprises individual light beams is transmitted into the monitored zone; and
the polarization component of the light reflected from the monitored zone which is orthogonal to the polarization direction of the transmitted light beam and the polarization component of the light reflected in the monitored zone which is parallel to the polarization direction of the transmitted light beam are detected and a received signal corresponding to the detected orthogonal polarization component and a received signal corresponding to the detected parallel polarization component are generated, **characterized in that**
the time curve of the received signal of the detected orthogonal polarization component of a light pulse and the time curve of the received signal of the detected parallel polarization component of the light pulse are evaluated, with the two courses being evaluated together.

## Revendications

1. Scanneur laser (10), en particulier scanneur laser de sécurité, selon le principe de fonctionnement du temps de vol de lumière pour la détection d'objets (19) dans une zone à surveiller (18), comportant une unité d'émission de lumière pourvue d'au moins un émetteur de lumière (12) pour émettre un faisceau lumineux d'émission polarisé (14) jusque dans la zone à surveiller (19),
une unité de réception de lumière (24, 48) pourvue d'au moins un récepteur de lumière (24) pour détecter la composante de polarisation de la lumière réfléchie (20) dans la zone à surveiller (19), composante qui est orthogonale à la direction de polarisation du faisceau lumineux d'émission (14), et pour générer un signal de réception (38) correspondant à la composante de polarisation détectée orthogonale, et
une unité d'évaluation (32) qui est conçue pour évaluer l'évolution temporelle du signal de réception (38) de la composante de polarisation détectée orthogonale,
**caractérisé en ce que**
l'unité d'évaluation (32) est conçue pour effectuer une détection d'objets exclusivement sur la base du signal de réception (38) de la composante de polarisation détectée orthogonale.

2. Scanneur laser selon la revendication 1,
**caractérisé en ce que**
l'unité de réception de lumière (24, 48) comprend un filtre de polarisation qui, vu en direction de vol de la lumière réfléchie (20), est agencé an avant dudit au moins un récepteur de lumière (24) et qui est orienté orthogonalement par rapport à la direction de polarisation du faisceau lumineux d'émission (14).

3. Scanneur laser (10), en particulier scanneur laser de sécurité, selon le principe de fonctionnement du temps de vol de lumière pour la détection d'objets (19) dans une zone à surveiller (18), comportant une unité d'émission de lumière pourvue d'au moins un émetteur de lumière (12) pour émettre un faisceau lumineux d'émission polarisé (14), constitué par des impulsions lumineuses individuelles, jusque dans la zone à surveiller (19), et
une unité de réception de lumière (24, 48) pourvue d'au moins un récepteur de lumière (24) pour détecter la composante de polarisation de la lumière réfléchie (20) dans la zone à surveiller (19), composante qui est orthogonale à la direction de polarisation du faisceau lumineux d'émission (14), et pour détecter la composante de polarisation de la lumière réfléchie (20) dans la zone à surveiller (19), composante qui est parallèle à la direction de polarisation du faisceau lumineux d'émission (14), et pour générer un signal de réception (38) correspondant à la composante de polarisation détectée orthogonale et un signal de réception (40) correspondant à la composante de polarisation détectée parallèle,
**caractérisé par**
une unité d'évaluation (32) qui est conçue pour évaluer l'évolution temporelle du signal de réception (38) de la composante de polarisation détectée orthogonale d'une impulsion lumineuse et l'évolution temporelle du signal de réception (40) de la composante de polarisation détectée parallèle de l'impulsion lumineuse, l'unité d'évaluation (32) étant conçue pour évaluer les deux évolutions (38, 40) conjointement.

4. Scanneur laser selon la revendication 3,
**caractérisé en ce que**
l'unité d'évaluation (32) est conçue pour reconnaître différents maxima (42, 44, 46) et/ou différentes pentes de front dans l'évolution du signal de réception (40) de la composante de polarisation détectée parallèle.

5. Scanneur laser selon la revendication 3 ou 4,
**caractérisé en ce que**
l'unité d'évaluation (32) est conçue pour comparer les deux évolutions (38, 40) l'une à l'autre.

6. Scanneur laser selon l'une au moins des revendications 3 à 5,
**caractérisé en ce que**
l'unité d'évaluation (32) est conçue pour déterminer une valeur pour une atténuation de lumière, une absorption de lumière et/ou une visibilité, en fonction de la caractéristique d'un maximum qui n'apparaît que dans le signal de réception (40) de la composante de polarisation parallèle.

7. Scanneur laser selon l'une au moins des revendications 3 à 6,
**caractérisé en ce que**
l'unité d'évaluation (32) est conçue pour régler l'intensité lumineuse du faisceau lumineux d'émission (14) en fonction de l'évaluation de l'une au moins des deux évolutions (38, 40).

8. Scanneur laser selon l'une au moins des revendications 3 à 7,
**caractérisé en ce que**
l'unité de réception de lumière (24, 48) comprend un séparateur de faisceau de polarisation (48) qui, vu en direction de vol de la lumière réfléchie (20), est agencé en avant dudit au moins un récepteur de lumière (24) et qui décompose la lumière réfléchie (20) en la composante de polarisation orthogonale et en la composante de polarisation parallèle.

9. Scanneur laser selon l'une au moins des revendications 3 à 8,
**caractérisé en ce que**
l'unité d'émission de lumière comprend deux émetteurs de lumière qui sont chacun conçus pour émettre un faisceau lumineux d'émission polarisé jusque dans la zone à surveiller (18).

10. Scanneur laser selon la revendication 9,
**caractérisé en ce que**
les directions de polarisation des deux faisceaux lumineux d'émission sont orientées orthogonalement l'une par rapport à l'autre.

11. Scanneur laser selon la revendication 9 ou 10,
**caractérisé en ce que**
la longueur d'onde et/ou le spectre de fréquences des deux faisceaux lumineux d'émission est identique.

12. Scanneur laser selon l'une au moins des revendications 3 à 11,
**caractérisé en ce que**
ledit au moins un récepteur de lumière (24) est conçu sous forme de récepteur de lumière à résolution spatiale et/ou comprend deux zones de réception spatialement séparées l'une de l'autre, afin de détecter la composante de polarisation orthogonale de la lumière réfléchie (20) et la composante de polarisation parallèle de la lumière réfléchie (20) indépendamment l'une de l'autre.

13. Procédé pour détecter des objets dans une zone à surveiller,
dans lequel
on émet un faisceau lumineux d'émission polarisé jusque dans la zone à surveiller,
on détecte la composante de polarisation de la lumière réfléchie depuis la zone à surveiller, composante qui est orthogonale à la direction de polarisation du faisceau lumineux d'émission, et on génère un signal de réception correspondant à la composante de polarisation détectée orthogonale, et on évalue l'évolution temporelle du signal de réception de la composante de polarisation détectée orthogonale,
**caractérisé en ce que**
on met en oeuvre une détection d'objets exclusivement en se basant sur le signal de réception de la composante de polarisation détectée orthogonale.

14. Procédé pour détecter des objets dans une zone à surveiller,
dans lequel
on émet un faisceau lumineux d'émission polarisé, constitué par des impulsions lumineuses individuelles, jusque dans la zone à surveiller, et on détecte la composante de polarisation de la lumière réfléchie depuis la zone à surveiller, composante qui est orthogonale à la direction de polarisation du faisceau lumineux d'émission, et la composante de polarisation de la lumière réfléchie dans la zone à surveiller, composante qui est parallèle à la direction de polarisation du faisceau lumineux d'émission, et on génère un signal de réception correspondant à la composante de polarisation détectée orthogonale, et un signal de réception correspondant à la composante de polarisation détectée parallèle,
**caractérisé en ce que**
on évalue l'évolution temporelle du signal de réception de la composante de polarisation détectée orthogonale d'une impulsion lumineuse, et l'évolution temporelle du signal de réception de la composante de polarisation détectée parallèle de l'impulsion lumineuse, les deux évolutions étant évaluées conjointement.
